# FASCICULE DE BREVET EUROPEEN

(11) **EP 2 384 619 B1**
(45) Date de publication et mention de la délivrance du brevet: **04.03.2015**
(21) Numéro de dépôt: 11164007.4
(22) Date de dépôt: 28.04.2011
(51) Int. Cl.: A01K 11/00

(54) **Ensemble de stockage pour au moins un dispositif d'identification animale et/ou de prélèvement de tissu animal, et procédé d'identification ou de prélèvement de tissu correspondant**
Lagerungseinheit für mindestens eine Identifikationsvorrichtung für Tiere und/oder eine Vorrichtung zur Entnahme von tierischem Gewebe, und entsprechendes Identifikations- oder Gewebeentnahmeverfahren
Storage unit for at least one device for animal identification and/or animal tissue sampling, and corresponding identification or tissue sampling method

(30) Priorité: 03.05.2010 FR 1053433
(43) Date de publication de la demande: 09.11.2011
(73) Titulaire: Allflex Europe, 35500 Vitré (FR)
(72) Inventeur: Decaluwe, Johan, 53000, Laval (FR); Lemaire, Emmanuel, 02390, Mont D'Origny (FR)
(74) Mandataire: Guy, Marion

(56) Documents cités:
- WO-A1-2009/127542
- FR-A1- 2 929 804
- US-A- 5 016 369
- US-A- 5 449 071

## Description

### 1. Domaine de l'invention

Le domaine de l'invention est celui du contrôle et/ou de l'identification des animaux, en vue notamment de la pose d'un dispositif d'identification (encore appelé marque) et/ou d'un prélèvement de tissu animal.

Plus précisément, l'invention concerne le conditionnement d'un tel dispositif d'identification et/ou de prélèvement.

### 2. Art antérieur

Le document US5449071 divulgue un ensemble de stockage pour au moins un dispositif de prélèvement de tissu animal, apte à stocker ledit au moins un dispositif de prélèvement, comprenant au moins un réservoir contenant un agent spécifique destiné à être appliqué au moins partiellement sur au moins un élément dudit dispositif de prélèvement.

Il est bien connu d'identifier les animaux (d'élevage notamment) au moyen d'une marque, apposée par exemple sur l'oreille ou une aile d'un animal. Ce marquage concerne aussi bien les bovins que les ovins, les porcins, les caprins, les volatiles, les poissons, ou toutes autres espèces animales. En effet, l'identification du bétail a été rendue obligatoire dans de nombreux pays, en particulier pour assurer le suivi du cheptel et garantir l'origine des animaux destinés notamment à la consommation.

Classiquement, une marque comprend un numéro d'identification inscrit sur une étiquette permettant de suivre l'animal tout au long de son existence. Par exemple, selon la Directive européenne 1760/2000, tous les bovins doivent être identifiés par une marque auriculaire apposée à chaque oreille. Les marques apposées aux deux oreilles d'un bovin, portant chacune un même code d'identification qui permet d'identifier cet animal de façon unique, forment un couple.

Ces marques sont apposées par perçage du tissu animal, de façon à fixer de manière irréversible une partie mâle dans une partie femelle, par exemple au moyen d'une bague, d'encoches, et/ou d'un clip de fixation.

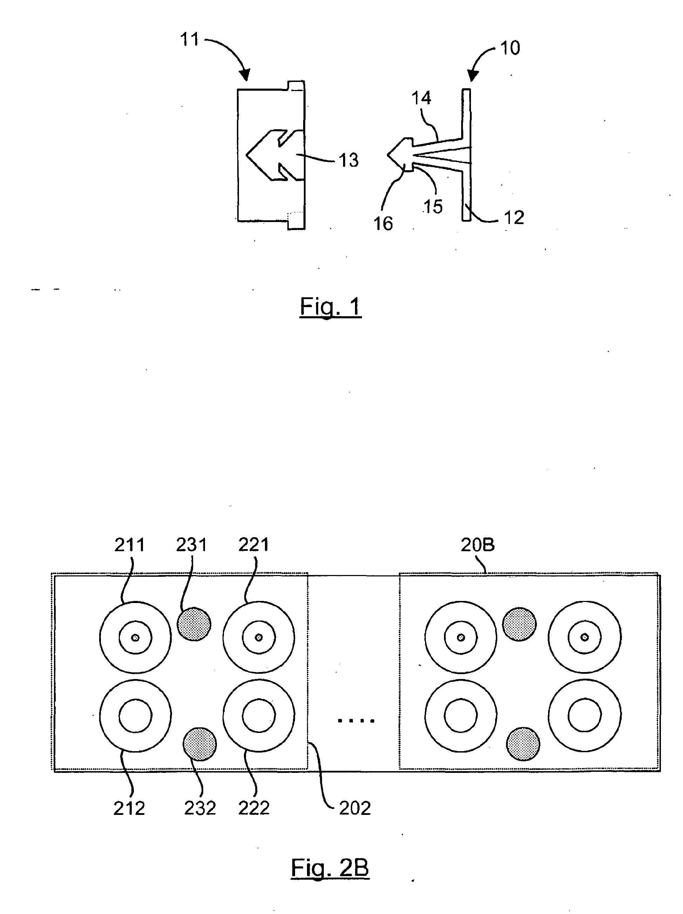

Un exemple d'une telle marque comprenant une partie mâle et une partie femelle est illustré en figure 1. La partie mâle 10 comprend une tige 14 s'étendant à partir d'un support 12 destiné à prendre appui sur une face de l'oreille de l'animal, sensiblement perpendiculairement à ce support 12.

La tige 14 est terminée par une pointe conique ou tronconique 16 (également appelée tête) délimitant un épaulement 15 externe permettant de maintenir la pointe 16 dans une cavité de réception 13 de la partie femelle 11.

La pointe 16 permet généralement de perforer le tissu animal avant de s'emboîter ou s'encliqueter dans la partie femelle 11, associant ainsi de façon irréversible la partie mâle 10 avec la partie femelle 11.

Il est également connu de prélever un échantillon de tissu animal lors de la pose ou bien indépendamment de la pose de la marque.

Par exemple, lorsque ce prélèvement est effectué lors de la pose de la marque, la pointe peut être tronquée et permettre le passage d'un organe de prélèvement, de type aiguille de biopsie. Selon une variante, un élément de coupe de type emporte-pièce peut être prévu à l'extrémité de la pointe tronquée.

De même, lorsque ce prélèvement est effectué indépendamment de la pose de la marque, un élément de coupe de type emporte-pièce peut être fixé à un outil de prélèvement comme une pince par exemple.

Dans tous les cas, l'élément traversant la peau de l'animal (pointe, aiguille de biopsie, emporte-pièce, etc) doit être propre, notamment pour éviter les infections au niveau de la plaie formée par cet élément « perforateur ». En effet, l'ouverture pratiquée (dans l'oreille, par exemple) représente un foyer d'infection dans lequel des micro-organismes peuvent se développer et pénétrer dans l'organisme de l'animal.

L'élément traversant la peau de l'animal doit donc être désinfecté avant utilisation, pour faciliter la cicatrisation de la plaie et réduire les risques d'infection.

Actuellement, deux solutions sont à disposition de l'utilisateur (éleveurs, exploitants agricoles, etc) pour désinfecter cet élément perforateur :
- l'utilisation d'un pot, contenant un liquide ou un gel désinfectant, dans lequel on vient tremper l'élément perforateur ;
- l'utilisation d'un pulvérisateur ou spray.

Ces conditionnements de produit désinfectant sous forme de pot ou de spray présentent malheureusement de nombreux inconvénients. Par exemple, un contenant de grande taille rend le transport du produit désinfectant difficile. De plus, un tel contenant ne sera pas nécessairement à portée de main de l'utilisateur lors du marquage et/ou du prélèvement de tissu. Par ailleurs, la profondeur et/ou la forme du contenant ne permettent pas toujours de « tremper » complètement l'élément perforateur avant utilisation.

Concernant plus spécifiquement les contenants de type pots, on peut remarquer qu'un même pot peut servir à la désinfection de plusieurs éléments perforateurs, rester ouvert plusieurs jours ou plusieurs semaines, etc, ce qui pose un problème de conservation et de propreté du produit une fois le pot entamé.

Si le pot est de grande taille, une partie de son contenu peut être transvasé dans un contenant plus petit pour en simplifier l'utilisation, comme un bouchon de bouteille ou un gobelet par exemple, ce qui pose également un problème de propreté et de pureté vis-à-vis du nouveau contenant et des produits résiduels éventuellement présents. De plus, une fois utilisé, le produit contenu dans le petit contenant est jeté, occasionnant ainsi pour l'utilisateur une perte de produit et donc un surcoût. Cette solution présente également des inconvénients en terme de développement durable, puisqu'elle nécessite un recyclage des petits contenants utilisés.

Le conditionnement du produit désinfectant sous forme de spray présente également des inconvénients. En effet, il génère également du gaspillage du produit et des salissures pour l'éleveur, puisque la zone couverte par le spray est approximative.

En conséquence, les conditionnements existants présentant de nombreux désavantages et étant peu pratiques à utiliser, une grande partie des éleveurs n'effectue pas cette opération de désinfection préalablement au marquage et/ou au prélèvement de tissu animal.

Il existe donc un besoin pour un nouveau conditionnement d'un tel produit, qui soit particulièrement simple à utiliser.

### 3. Exposé de l'invention

L'invention propose une solution nouvelle qui ne présente pas l'ensemble de ces inconvénients de l'art antérieur, sous la forme d'un ensemble de stockage pour au moins un dispositif d'identification animale et/ou de prélèvement de tissu animal, apte à stocker ledit au moins un dispositif d'identification et/ou de prélèvement.

Selon l'invention, un tel ensemble de stockage comprend au moins un réservoir contenant un agent spécifique destiné à être appliqué au moins partiellement sur un élément dudit dispositif d'identification et/ou de prélèvement, le réservoir étant formé par ou inséré dans une cavité dudit ensemble de stockage.

Un tel ensemble de stockage comprend également des moyens de blocage empêchant un assemblage irréversible d'une partie mâle et d'une partie femelle dudit dispositif d'identification et/ou de prélèvement.

On entend ici par dispositif d'identification, ou marque, un ensemble formé de plusieurs éléments, dont au moins une partie mâle et une partie femelle, comme par exemple illustré en figure 1. Un dispositif de prélèvement est un ensemble formé de plusieurs éléments, dont au moins un élément de coupe (par exemple un emporte-pièce, un poinçon, une aiguille de biopsie, etc) et un élément de stockage (par exemple un tube de prélèvement).

L'invention propose ainsi un nouvel ensemble pour le conditionnement d'un ou plusieurs dispositif(s) d'identification animale et/ou de prélèvement de tissu animal, permettant à l'utilisateur d'avoir toujours à portée de main un réservoir contenant un agent spécifique, comme un produit désinfectant, lors de la pose d'une marque ou du prélèvement d'un échantillon de tissu animal.

En effet, l'ensemble de stockage selon l'invention permet à la fois de stocker un ou plusieurs dispositif(s) d'identification animale et/ou de prélèvement de tissu animal, maintenus par exemple sur l'ensemble de stockage par des moyens de maintien, et un ou plusieurs réservoirs contenant un agent spécifique. Lors de la pose d'une marque ou du prélèvement d'un échantillon de tissu, l'utilisateur peut alors « détacher » un dispositif d'identification et/ou de prélèvement de l'ensemble de stockage, appliquer l'agent spécifique contenu dans le réservoir de l'ensemble de stockage à au moins une portion d'un élément du dispositif (comme la pointe d'une partie mâle, une aiguille de biopsie, un emporte-pièce, etc), puis utiliser ledit dispositif, c'est-à-dire poser la marque ou prélever un échantillon de tissu.

On incite de cette façon les éleveurs à traiter l'élément venant perforer les tissus de l'animal, en leur fournissant un ensemble « tout en un », puisque l'ensemble de stockage des dispositifs d'identification et/ou de prélèvement, comprend au moins un réservoir contenant un agent spécifique, comme une substance antiseptique.

L'invention offre ainsi l'avantage à l'utilisateur d'éviter d'avoir recours à un contenant annexe pour les produits désinfectants notamment, tout en lui permettant une facilité d'utilisation. En effet, l'utilisateur n'a plus à transporter de contenant encombrant, ni à transvaser un produit d'un récipient à un autre.

De plus, on peut transporter simultanément le ou les dispositif(s) d'identification et/ou de prélèvement et le ou les réservoir(s) contenant la quantité d'agent spécifique nécessaire à l'utilisation de ces dispositifs. On évite ainsi de gaspiller l'agent spécifique, en adaptant la quantité d'agent spécifique (prévue dans un ou plusieurs réservoirs) au nombre de dispositifs.

On note que l'agent spécifique contenu dans le réservoir n'est pas nécessairement un agent désinfectant, mais peut être un agent cicatrisant, un agent conservateur, un agent dessiccant, un médicament, un vaccin, une combinaison d'au moins deux des agents précédents, etc.

Si l'agent est un agent désinfectant ou cicatrisant, il permet de détruire au moins en partie les micro-organismes (bactéries, virus, etc) pouvant provoquer des infections au niveau des tissus perforés lors de la pose de la marque ou du prélèvement, ou contaminer l'échantillon prélevé.

Si l'agent est un agent conservateur ou dessicant, il permet d'améliorer la conservation d'un échantillon de tissu à prélever, et éventuellement de le préparer en vue d'un traitement ultérieur comme une analyse ADN.

Si l'agent est un médicament ou un vaccin, il permet de soigner ou traiter l'animal en cas de besoin, cet agent pouvant passer dans le sang au niveau des tissus perforés ou être absorbé par la peau de l'animal.

En d'autres termes, l'agent spécifique selon l'invention peut prendre la forme de tout produit pouvant agir sur l'animal ou sur un échantillon de tissu prélevé de l'animal.

En particulier, un tel agent spécifique peut se présenter sous différentes formes, comme un gel, une crème, une graisse, un liquide, une poudre, un gaz, une mousse imprégnée, etc, contenu dans un réservoir.

Plusieurs réservoirs contenant des agents spécifiques distincts peuvent également être prévus sur l'ensemble de stockage, permettant par exemple de désinfecter dans un premier temps l'élément destiné à perforer les tissus, puis d'appliquer un agent conservateur à l'élément dans un deuxième temps, si un tel élément est destiné à prélever un échantillon de tissu.

Selon un premier mode de réalisation, le réservoir est amovible.

L'ensemble de stockage peut alors prévoir un logement de réception du réservoir.

Ainsi, les procédés de fabrication et/ou d'assemblage de deux ensembles de stockage destinés à contenir des agents spécifiques différents peuvent être identiques jusqu'au stade de l'ajout du ou des réservoirs.

De plus, dans le cas d'agents ayant une faible durée de conservation, les réservoirs peuvent être ajoutés juste avant la livraison des ensembles de stockage ou juste avant leur utilisation.

L'utilisateur peut par exemple recevoir d'une part des ensembles de stockage comprenant des dispositifs d'identification et/ou de prélèvement sans réservoir et, d'autre part, selon ses besoins, des lots de réservoirs à insérer dans les ensembles de stockage. Il peut également remplacer les réservoirs contenant des agents non-utilisés et éventuellement périmés.

Par ailleurs, il est possible pour l'utilisateur de retirer le réservoir de l'ensemble de stockage avant application de l'agent spécifique sur un élément du dispositif d'identification et/ou de prélèvement.

Par exemple, le réservoir amovible peut être positionné directement sur un outil de pose d'une marque et/ou de prélèvement, comme une pince, avant la pose de la marque ou le prélèvement de tissu.

Le réservoir est alors perforé lors de la pose de la marque ou du prélèvement de tissu, et peut libérer l'agent spécifique qu'il contient directement au niveau de la plaie de l'animal, ou dans un tube de réception des tissus prélevés.

Selon un deuxième mode de réalisation, le réservoir est formé par une cavité dudit ensemble de stockage.

Par exemple, l'ensemble de stockage est réalisé par moulage d'un matériau plastique de type polyéthylène, polystyrène, polyéthylène ou autres, et prévoit au moins une cavité apte à contenir l'agent spécifique.

Au moins une portion d'un élément d'un dispositif d'identification et/ou de prélèvement, comme la pointe d'une partie mâle, une aiguille de biopsie, un emporte-pièce, ou autre, peuvent directement « tremper » dans l'agent spécifique, ou être en contact direct avec cet agent, en stockant cet élément directement dans la cavité de l'ensemble de stockage.

On s'assure de cette façon d'une bonne application de l'agent spécifique sur l'élément et une optimisation de son action, du fait de la mise en contact prolongée.

Selon une variante, l'utilisateur vient positionner l'élément sur un outil de pose d'une marque et/ou de prélèvement, comme une pince, et perforer l'ensemble de stockage au niveau de la cavité formant réservoir, avant la pose de la marque ou le prélèvement de tissu. Le réservoir est alors perforé et peut libérer l'agent spécifique qu'il contient directement sur l'élément du dispositif d'identification et/ou de prélèvement.

A nouveau, on s'assure d'une application correctement localisée de l'agent spécifique sur l'élément.

En particulier, quel que soit le mode de réalisation envisagé, le réservoir peut être fermé par des moyens de fermeture amovibles ou perforables.

Ces moyens de fermeture appartiennent au groupe comprenant un opercule (thermo-soudé, collé, ou autre), un bouchon, une portion dudit élément, ou par tout autre moyen.

Par exemple, si l'on considère un élément de type partie mâle dont la pointe et éventuellement une partie de la tige « trempent » ou sont en contact direct avec l'agent spécifique, les moyens de fermeture peuvent être formés par le support de la partie mâle.

Les moyens de fermeture amovibles permettent une ré-utilisation ultérieure de l'agent contenu dans le réservoir, en fermant le réservoir après chaque utilisation.

Dans certains modes de réalisation de l'invention, le réservoir présente une forme adaptée pour que l'élément puisse être au moins partiellement en contact avec l'agent spécifique.

On obtient de cette façon un « enrobage » adéquat de l'élément ou de la portion de l'élément venant perforer les tissus de l'animal, permettant d'optimiser l'action de l'agent spécifique.

De plus, cette forme adaptée permet de minimiser la quantité d'agent nécessaire.

En particulier, le réservoir présente un diamètre d'entrée de taille supérieure ou égale au diamètre de la base d'une pointe d'une partie mâle du dispositif d'identification et/ou de prélèvement.

De cette façon, la forme du réservoir « épouse » la forme de la pointe de la partie mâle et il est possible d'imprégner l'ensemble de la pointe de l'agent spécifique avant la pose d'une marque et/ou le prélèvement de tissus.

Par ailleurs, l'ensemble de stockage selon l'invention comprend des moyens de blocage empêchant un assemblage irréversible d'une partie mâle et d'une partie femelle du dispositif d'identification et/ou de prélèvement.

Par exemple, ces moyens de blocage prennent la forme d'au moins un ergot, qui peut venir en butée d'un outil de prélèvement ou de pose.

Ces moyens de blocage peuvent également être formés par le fond du réservoir, qui présente une épaisseur suffisante pour empêcher l'assemblage irréversible des parties mâle et femelle.

Selon une caractéristique particulière de l'invention, l'ensemble de stockage comprend un réservoir par dispositif d'identification et/ou de prélèvement.

Cette caractéristique offre des avantages en termes d'hygiène, puisque le réservoir est à usage unique et l'agent spécifique n'est pas réutilisé, ce qui permet de garantir la pureté et la conservation du produit. De plus, la quantité d'agent prévu par réservoir peut être très faible, ce qui permet d'éviter, ou à tout le moins de réduire, les pertes de produit.

Selon une variante, l'ensemble de stockage comprend un réservoir par couple, où un couple comprend au moins deux dispositifs d'identification et/ou de prélèvement portant un même code d'identification (par exemple deux marques destinées à être apposées à chaque oreille d'un animal, ou un dispositif d'identification et un dispositif de prélèvement destinés au même animal, etc).

Un même réservoir peut donc être utilisé pour réaliser deux opérations distinctes sur un même animal, et chaque réservoir peut contenir la quantité d'agent adapté pour un couple.

La réutilisation de l'agent étant immédiate, l'invention offre ainsi l'avantage de se détacher des problématiques de conservation de l'agent spécifique.

Selon une autre variante, un réservoir unique est prévu pour l'ensemble de stockage.

Par exemple, un tel ensemble de stockage comprend dix dispositifs d'identification sous la forme de deux rangées, les parties mâles formant une première rangée et les parties femelles associées à ces parties mâles formant une deuxième rangée.

On optimise de cette façon la quantité de produit par ensemble de stockage.

Selon un autre aspect de l'invention, l'ensemble de stockage comprend des portions sécables permettant la séparation d'au moins un réservoir et/ou dispositif d'identification et/ou dispositif de prélèvement.

Un tel ensemble de stockage permet ainsi de détacher le réservoir avant utilisation pour faciliter sa manutention lors de sa perforation.

Il permet également de retirer les emplacements des réservoirs/dispositifs déjà utilisés, notamment des réservoirs utilisés, afin d'éviter de salir les réservoirs/dispositifs non encore utilisés et de diminuer l'encombrement de l'ensemble de stockage.

Dans un autre mode de réalisation, l'invention concerne un procédé d'identification animale ou de prélèvement de tissu animal, permettant d'identifier un animal à partir d'un dispositif d'identification animale et/ou de prélever un tissu animal à partir d'un dispositif de prélèvement de tissu animal, comprenant une étape de mise en place d'au moins un élément du dispositif d'identification et/ou de prélèvement sur un outil de pose d'un dispositif d'identification et/ou de prélèvement.

Selon l'invention, un tel procédé comprend également les étapes suivantes :
- application, sur au moins une portion dudit élément, d'un agent spécifique contenu dans un réservoir appartenant à un ensemble de stockage tel que décrit précédemment ;
- identification de l'animal et/ou prélèvement de tissu animal à partir dudit élément.

Il est ainsi aisé pour l'utilisateur (éleveur) d'appliquer l'agent spécifique avant l'opération d'identification (marquage) ou de prélèvement de tissus, puisqu'il dispose d'un contenant unique stockant à la fois le ou les dispositif(s) d'identification et/ou de prélèvement et le ou les réservoir(s) d'agent spécifique.

En particulier, l'étape d'application comprend une étape de perforation du réservoir par l'élément, mise en oeuvre en exerçant une première pression sur ledit outil et l'étape d'identification et/ou prélèvement est mise en oeuvre en exerçant une deuxième pression sur l'outil, supérieure à la première pression.

Par supérieure, on entend ici une pression ayant pour résultat une course plus importante dudit élément.

De cette façon, la première pression permet uniquement de perforer le réservoir et de libérer l'agent spécifique, sans assembler de façon irréversible les parties mâle et femelle d'un dispositif d'identification et/ou de prélèvement. C'est la deuxième pression, supérieure à la première pression, qui permet d'assembler de façon irréversible ces parties mâle et femelle.

Ainsi, l'application de l'agent peut être effectuée une fois que la partie mâle est positionnée sur l'outil. Il est donc possible d'effectuer les manipulations nécessaires sur la partie mâle, notamment son installation sur l'outil, avant l'application de l'agent.

Ceci permet d'éviter une contamination de la partie mâle ou une dispersion de l'agent spécifique après son application.

De plus, lors de la perforation du réservoir, l'agent spécifique qu'il contient peut se déposer à la fois sur la partie mâle et sur la partie femelle.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1, décrit en relation avec l'art antérieur, illustre une marque auriculaire connue comprenant une partie mâle et une partie femelle ;
- les figures 2A et 2B illustrent des ensembles de stockage selon un mode de réalisation de l'invention ;
- la figure 3 illustre un exemple de réservoir d'un ensemble de stockage selon la figure 2A ;
- la figure 4 illustre la position d'un élément perforateur dans le réservoir de la figure 3 ;
- la figure 5 illustre les étapes du procédé de pose d'un dispositif d'identification et/ou de prélèvement de tissu animal selon un mode de réalisation de l'invention.

### 5. Description d'un mode de réalisation de l'invention

### 5.1 Principe général

Le principe général de l'invention repose sur la fourniture d'un ensemble de stockage « tout en un » pour le marquage d'un animal et/ou la réalisation d'un prélèvement de tissu animal. Un tel ensemble comprend au moins un dispositif d'identification animale (marque) et/ou de prélèvement de tissu animal, et au moins un réservoir permettant d'appliquer un agent spécifique (au moins partiellement) sur au moins un élément d'un tel dispositif (partie mâle, partie femelle, élément perforateur, etc).

Ainsi, dans le cas du marquage d'un animal par exemple, l'éleveur dispose sur un même ensemble de stockage, d'une partie mâle, de la partie femelle qui lui est associée, et d'un réservoir contenant une quantité de produit adapté pour la pose de cette marque. Selon cet exemple, l'invention permet ainsi un transport conjoint des identifiants et d'au moins un agent spécifique, du fait du conditionnement « tout-en-un », sans risque d'oubli et sans contrainte supplémentaire pour l'utilisateur.

### 5.2 Présentation d'un ensemble de stockage

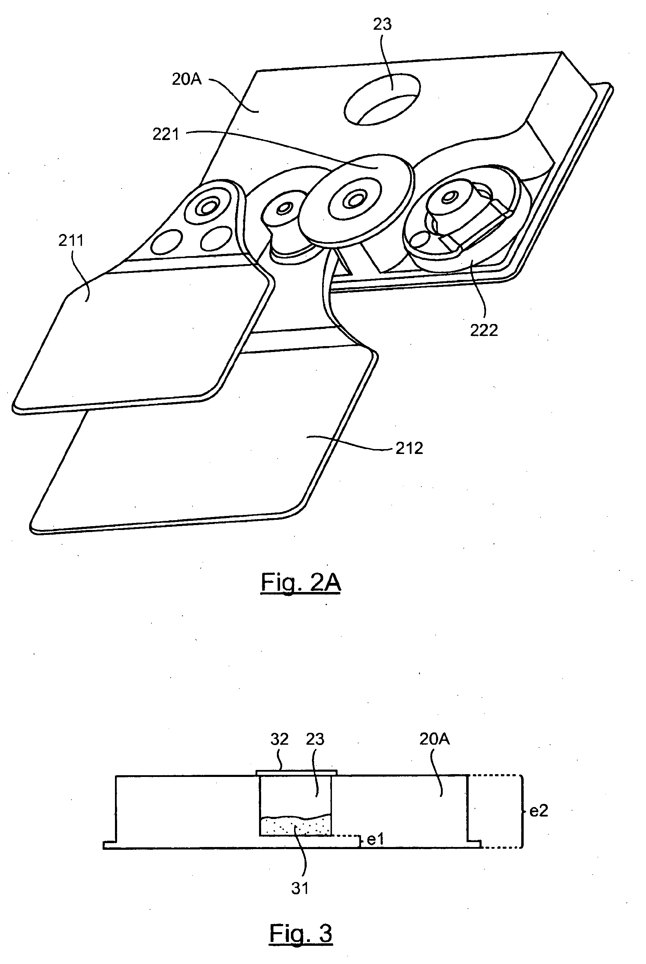

On décrit ci-après, en relation avec les figures 2A et 2B, un mode de réalisation particulier d'un ensemble de stockage selon l'invention, adapté au stockage d'un couple (figure 2A) ou plusieurs couples (figure 2B) comprenant chacun deux dispositifs d'identification portant un même code d'identification (par exemple deux marques destinées à être apposées à chaque oreille d'un animal).

Classiquement, chaque dispositif d'identification comprend une partie mâle (211, 221) et une partie femelle (212, 222) solidarisées à l'ensemble de stockage (20A, 20B) par des moyens de maintien. Par exemple, l'ensemble de stockage est réalisé en plastique thermoformé, comprenant deux cavités permettant de maintenir les tiges des parties mâles 211 et 221, et deux supports présentant la forme de tiges permettant de recevoir les parties femelles 212 et 222 d'un couple.

Plus précisément, la figure 2A illustre un ensemble de stockage 20A permettant de stocker un unique couple, et la figure 2B illustre un ensemble de stockage 20B prenant la forme d'une barrette de conditionnement permettant de stocker par exemple cinq couples.

Comme illustré en figure 2A, en plus de ces moyens de maintien classiques, l'ensemble de stockage 20A comprend un réservoir 23, apte à contenir un agent spécifique, comme un agent désinfectant et/ou cicatrisant. On prévoit donc selon cet exemple un réservoir 23 pour un couple.

Il est également possible de prévoir deux réservoirs 231 et 232 pour un même couple (soit un réservoir par marque), comme illustré en figure 2B.

Selon une variante non représentée, il est également possible de prévoir un unique réservoir pour l'ensemble de la barrette.

En particulier, la quantité d'agent spécifique contenue dans les réservoirs varie selon le nombre de marques et de réservoirs de l'ensemble de stockage. Ainsi, si on prévoit un réservoir par marque, la quantité d'agent prévue pour un réservoir peut être très faible (de l'ordre de quelques millilitres pour un agent sous forme liquide par exemple). A l'inverse, si l'on prévoit un réservoir pour l'ensemble de la barrette, la quantité d'agent prévue pour le réservoir peut être supérieure (de l'ordre de quelques centilitres par exemple). La taille du réservoir peut également varier.

On note que les différents réservoirs 231, 232 d'un même ensemble de stockage 20B peuvent contenir un même agent spécifique ou des agents différents. Ces agents peuvent alors être utilisables successivement (par exemple un agent désinfectant puis un agent cicatrisant), ou selon les besoins de l'utilisateur (par exemple un agent désinfectant et un agent conservateur, si l'utilisateur prélève un échantillon de tissu animal, conjointement ou indépendamment de la pose d'une marque).

Dans un mode particulier de réalisation de l'invention, la barrette peut présenter des portions sécables 202, permettant de séparer des couples et/ou des marques et/ou des réservoirs, ce qui permet une séparation d'une portion de la barrette au fur et à mesure des besoins de l'utilisateur.

On note que toute autre forme de l'ensemble de stockage peuvent également être envisagées (rangée, bloc, cercle, etc).

Une fois le ou les couples solidarisés à la barrette et le ou les réservoirs contenant au moins un agent spécifique, la barrette peut être emballée et expédiée aux utilisateurs, dans un sachet souple en plastique par exemple.

La figure 3 présente une vue en coupe du réservoir 23 de la figure 2A.

Un tel réservoir présente par exemple une forme cylindrique et contient un agent spécifique 31.

Un tel agent est par exemple un agent désinfectant ou antiseptique ou cicatrisant comme de l'eau oxygénée. Ainsi l'invention permet de diminuer le risque de contamination de la plaie formée dans les tissus de l'animal, et permet une cicatrisation améliorée.

Il peut également s'agir d'un produit de conservation, notamment pour une utilisation avec un dispositif de prélèvement, qui permet soit de prélever un échantillon de tissu sans poser de marque (« Tissue sampling unit »), soit de prélever un échantillon de tissu en posant une marque (« Tissue sampling Tag »). Ainsi, l'agent conservateur utilisé peut par exemple être un agent dessiccant, à base de silice, et/ou d'argile notamment.

L'agent spécifique peut encore être un médicament, un vaccin ou tout autre agent agissant sur un tissu concerné par une pose d'une marque ou un prélèvement, ou toute combinaison d'un de ces agents.

L'agent spécifique peut notamment être présenté par exemple sous la forme d'un gel, d'une graisse, d'une crème, d'un gaz, ou d'un liquide. Dans une alternative, le réservoir 23 contient une mousse (de type polyuréthane ou polyéthylène par exemple) imprégnée d'un tel agent.

Comme déjà indiqué, la forme du réservoir 23 est adaptée pour recevoir l'élément du dispositif d'identification et/ou de prélèvement destiné à perforer les tissus de l'animal.

Dans le mode de réalisation présenté en figure 3, le réservoir 23 présente une ouverture sensiblement circulaire permettant le passage de la pointe de la partie mâle 211 ou 221, fermée par un opercule 32 qui permet de conserver l'agent spécifique. Cet opercule 32 peut être retiré du réservoir 23 avant utilisation de l'agent spécifique, ou bien percé par la pointe de la partie mâle ou tout autre élément perforateur d'un dispositif d'identification et/ou de prélèvement.

Conformément à l'invention, un tel réservoir 23 permet ainsi l'enrobage de la pointe (et éventuellement d'une portion de la tige) de la partie mâle 211, 221 par l'agent spécifique 31.

En particulier, le diamètre du réservoir 23 est ici sensiblement égal au diamètre de la base de la pointe de la partie mâle, de manière à contenir seulement la quantité d'agent nécessaire à l'action sur la pointe.

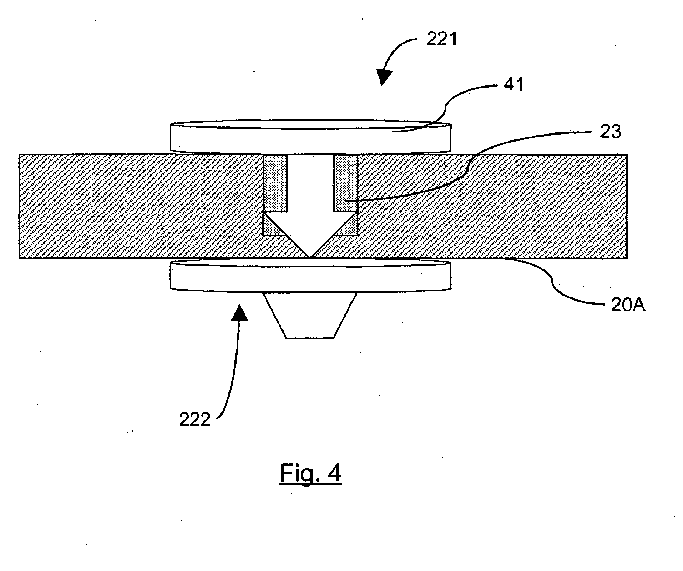

La figure 4 illustre plus précisément la position de la pointe de la partie mâle 221 dans le réservoir 23.

Selon cet exemple de réalisation, l'ouverture du réservoir 23 présente un diamètre très légèrement supérieur à celui de la base de la pointe ou d'une portion tronconique de la pointe (correspondant à la partie la plus large de la pointe), de sorte à limiter la quantité d'agent spécifique nécessaire à l'enrobage de la pointe.

Avantageusement, le fond du réservoir 23 peut être perforé par la pointe de la partie mâle 221, ou tout autre élément perforateur, pour permettre un contact de l'agent spécifique avec la partie femelle 222 et/ou un tube de prélèvement.

Dans un tel mode de réalisation, il est nécessaire de veiller à conserver la possibilité de retirer l'élément perforateur du réservoir et de la partie femelle 222 et/ou du tube de prélèvement, puisque la marque n'a pas encore été posée ou l'échantillon pas encore prélevé.

Ainsi, dans certains modes de réalisation de l'invention, adaptés notamment à une utilisation pour le marquage d'un animal, la forme du réservoir doit être adaptée pour empêcher, lors de la perforation du réservoir, une pénétration de la partie mâle dans la partie femelle d'une marque provoquant leur verrouillage.

Différents moyens de blocage peuvent être mis en oeuvre à cet effet, notamment une épaisseur adéquate du fond du réservoir (par exemple une épaisseur e1 de l'ordre de 3 millimètres pour une épaisseur de l'ensemble de stockage e2 de l'ordre de 15 millimètres). Ces épaisseurs peuvent varier en fonction du type de marque, de la longueur des tiges, de la dureté de l'ensemble de stockage, etc.

La partie mâle peut également présenter un support 41 venant s'appuyer sur les bords du réservoir 23 comme illustré en figure 4, limitant l'introduction de la tige dans le réservoir tout en permettant de la perforation du fond du réservoir.

Ces moyens de blocage peuvent également prendre la forme d'un ergot venant en butée d'un outil de prélèvement ou de pose d'une marque, ou d'une protubérance ou d'une encoche sur le réservoir qui permet de garantir un positionnement respectif des parties mâle et femelle selon des axes transversaux différents.

La forme d'un réservoir n'est bien évidemment pas limitée à la forme illustrée sur les figures. Ainsi, un réservoir peut présenter une forme oblongue.

De plus, le réservoir peut être formé par une cavité de l'ensemble de stockage, comme illustré en figure 2A, 2B, 3 et 4, ou être amovible et pourvu dans un logement de réception de l'ensemble de stockage.

Par ailleurs, bien que les figures illustrent l'application de l'invention au stockage et à l'utilisation d'un dispositif d'identification animale, les mêmes caractéristiques et avantages s'appliquent pour un dispositif de prélèvement de tissu animal.

Par ailleurs, un ensemble de stockage selon l'invention peut également prévoir des emplacements pour stocker d'autres éléments, comme un couvercle de tube de prélèvement, etc.

### 5.3 Fabrication des ensembles de stockage

Un autre avantage de l'invention réside dans le procédé de fabrication et de conditionnement de tels ensembles de stockage, qui est aisé à mettre en oeuvre.

On peut en effet prévoir une première ligne de production classique pour produire les dispositifs d'identification et/ou de prélèvement (parties mâles, parties femelles, ou tout autre élément à insérer dans les ensembles de stockage), une deuxième ligne de production pour générer les ensembles de stockage selon l'invention (comprenant éventuellement un réservoir préformé), une éventuelle troisième ligne de production pour produire les réservoirs contenant l'agent spécifique s'ils sont amovibles, et une ligne d'assemblage pour insérer les dispositifs d'identification et/ou de prélèvement ainsi fabriqués, et éventuellement les réservoirs, sur les ensembles de stockage. Il ne reste alors qu'à insérer les ensembles de stockage dans une enveloppe par exemple, avant expédition vers les utilisateurs.

### 5.4 Exemple de mise en oeuvre du procédé d'identification animal ou de prélèvement de tissu animal selon un mode de réalisation de l'invention

On décrit ci-après l'utilisation d'un ensemble de stockage selon l'invention, par exemple par un éleveur.

Comme décrit ci-dessus, un tel ensemble de stockage comprend au moins un dispositif d'identification et/ou de prélèvement, et au moins un réservoir contenant un agent spécifique.

Selon l'invention, au cours d'une première étape, on met en place au moins un élément du dispositif d'identification et/ou de prélèvement sur un outil de pose d'un dispositif d'identification et/ou de prélèvement.

On applique ensuite au cours d'une seconde étape, sur au moins une portion de l'élément (préférentiellement la portion de l'élément destinée à venir en contact avec les tissus de l'animal), un agent spécifique contenu dans le réservoir de l'ensemble de stockage.

Au cours d'une troisième étape, on réalise alors l'opération d'identification et/ou de prélèvement de tissu animal, en utilisant l'élément sur lequel l'agent spécifique a été appliqué.

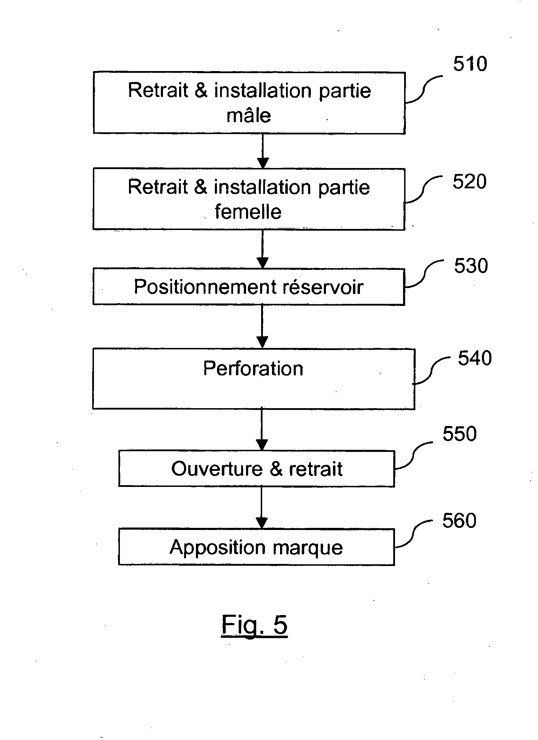

On présente, en relation avec la figure 5, un mode particulier de mise en oeuvre du procédé selon l'invention, lors de la pose, sur un animal, d'une marque à disposition dans l'ensemble de stockage tel qu'illustré par la figure 2A par exemple.

La figure 5 illustre le fonctionnement dynamique de l'invention.

Le procédé comprend tout d'abord une étape 510 de retrait de la partie mâle 221 de l'ensemble de stockage 20A et d'installation de cette partie mâle sur une première mâchoire d'un outil de pose, par exemple une pince, puis une étape 520 de retrait de la partie femelle 222 de l'ensemble de stockage 20B et d'installation de cette partie femelle sur une deuxième mâchoire de la pince.

On note que les étapes 510 et 520 peuvent être réalisées en deux phases (retrait puis installation de la partie mâle ou femelle sur la pince) ou en un seul geste de l'éleveur, la partie mâle ou femelle étant assemblée par exemple par clippage à la pince.

Dans d'autres modes de réalisation de l'invention, il est possible de fixer un élément de coupe de type emporte-pièce sur une première mâchoire de la pince, et un tube de réception sur une deuxième mâchoire de la pince.

Comme illustré en figure 5, le procédé comprend ensuite une étape de positionnement 530 du réservoir 23 entre les deux mâchoires de la pince, puis une étape de perforation 540 du réservoir, en actionnant une première fois la pince. L'utilisateur exerce donc une première pression sur la pince, permettant de perforer le réservoir sans emboîter de façon irréversible les parties mâle 221 et femelle 222. Le résultat de cette étape de perforation 540 est illustré en figure 4. Cette étape de perforation 540 permet d'imprégner la pointe et la tige de la partie mâle 221 avec l'agent spécifique. Selon l'épaisseur du fond du réservoir, cette étape de perforation 540 permet également de perforer le fond du réservoir et d'imprégner au moins partiellement la cavité de la partie femelle 222.

Ainsi, l'étape de perforation 540 du réservoir permet par exemple un enrobement de la partie mâle 221 par un agent liquide présent dans le réservoir 23 tout en provoquant une coulée de l'agent sur la partie femelle 222 de la marque.

Si un élément de coupe de type emporte-pièce est fixé sur la première mâchoire de la pince, et un tube de réception fixé sur la deuxième mâchoire de la pince, l'étape de perforation 540 permet d'imprégner au moins partiellement l'élément de coupe avec l'agent spécifique, et éventuellement d'imprégner au moins partiellement un tube de réception (par exemple en laissant l'agent spécifique s'écouler à l'intérieur du tube de réception).

Au cours d'une étape suivante (550), l'éleveur peut ouvrir la pince pour retirer le réservoir, puis apposer (560) la marque sur l'animal en positionnant l'oreille de l'animal par exemple entre les deux mâchoires de la pince, puis en actionnant une deuxième fois la pince. L'utilisateur exerce donc une deuxième pression sur la pince, supérieure à la première pression, permettant de verrouiller les parties mâle et femelle de part et d'autre de l'oreille de l'animal.

## Revendications

1. Ensemble de stockage pour au moins un dispositif d'identification animale et/ou de prélèvement de tissu animal, apte à stocker ledit au moins un dispositif d'identification et/ou de prélèvement, comprenant
- au moins un réservoir (23) formé par ou inséré dans une cavité dudit ensemble de stockage et contenant un agent spécifique destiné à être appliqué au moins partiellement sur au moins un élément dudit dispositif d'identification et/ou de prélèvement ; et
**caractérisé en ce qu'**il comprend:
- des moyens de blocage (41) empêchant un assemblage irréversible d'une partie mâle (10) et d'une partie femelle (11) dudit dispositif d'identification et/ou de prélèvement.

2. Ensemble de stockage selon la revendication 1, **caractérisé en ce que** ledit réservoir (23) est amovible.

3. Ensemble de stockage selon l'une quelconque des revendications 1 et 2, **caractérisé en ce que** ledit réservoir (23) est fermé par des moyens de fermeture amovibles ou perforables.

4. Ensemble de stockage selon la revendication 3, **caractérisé en ce que** lesdits moyens de fermeture appartiennent au groupe comprenant :
- un opercule,
- un bouchon,
- une portion dudit élément.

5. Ensemble de stockage selon l'une quelconque des revendications 1 à 4 **caractérisé en ce que** ledit réservoir (23) présente une forme adaptée pour que ledit élément puisse être au moins partiellement en contact avec ledit agent spécifique.

6. Ensemble de stockage selon la revendication 5, **caractérisé en ce que** ledit réservoir (23) présente un diamètre d'entrée supérieur ou égal au diamètre de la base d'une pointe de la partie mâle dudit dispositif d'identification et/ou de prélèvement.

7. Ensemble de stockage selon l'une quelconque des revendications 1 à 6, **caractérisé en ce que** lesdits moyens de blocage prennent la forme d'au moins un ergot.

8. Ensemble de stockage selon l'une quelconque des revendications 1 à 7, **caractérisé en ce que** lesdits moyens de blocage sont formés par le fond dudit réservoir (23), qui présente une épaisseur (el) empêchant l'assemblage irréversible desdites parties mâle et femelle.

9. Ensemble de stockage selon l'une quelconque des revendications 1 à 8, **caractérisé en ce qu'**il comprend un réservoir (23) par dispositif d'identification et/ou de prélèvement.

10. Ensemble de stockage selon l'une quelconque des revendications 1 à 9, **caractérisé en ce qu'**il comprend des portions sécables permettant la séparation d'au moins un réservoir (23) et/ou dispositif d'identification et/ou dispositif de prélèvement.

11. Ensemble de stockage selon l'une quelconque des revendications 1 à 10, **caractérisé en ce que** ledit agent spécifique appartient au groupe comprenant :
- un agent désinfectant ;
- un agent cicatrisant ;
- un agent conservateur ;
- un agent dessiccant ;
- un médicament ;
- un vaccin ;
- une combinaison d'au moins deux des agents précédents.

12. Ensemble de stockage selon l'une quelconque des revendications 1 à 11, **caractérisé en ce que** ledit agent spécifique se présente sous l'une des formes appartenant au groupe comprenant :
- un gel ;
- une crème ;
- une graisse,
- un liquide ;
- une poudre ;
- un gaz ;
- une mousse imprégnée.

13. Procédé d'identification animale ou de prélèvement de tissu animal, permettant d'identifier un animal à partir d'un dispositif d'identification animale et/ou de prélever un tissu animal à partir d'un dispositif de prélèvement de tissu animal,
comprenant une étape de mise en place d'au moins un élément dudit dispositif d'identification et/ou de prélèvement sur un outil de pose d'un dispositif d'identification et/ou de prélèvement ;
**caractérisé en ce qu'**il comprend également les étapes suivantes :
- application, sur au moins une portion dudit élément, d'un agent spécifique contenu dans un réservoir (23) appartenant à un ensemble de stockage selon l'une quelconque des revendications 1 à 12;
- identification dudit animal et/ou prélèvement de tissu animal à partir dudit élément.

14. Procédé d'identification animale ou de prélèvement de tissu animal selon la revendication 13, **caractérisé en ce que** ladite étape d'application comprend une étape de perforation dudit réservoir (23) par ledit élément mise en oeuvre en exerçant une première pression sur ledit outil et **en ce que** ladite étape d'identification et/ou prélèvement est mise en oeuvre en exerçant une deuxième pression sur ledit outil, supérieure à ladite première pression.

## Patentansprüche

1. Lagerungseinheit für wenigstens eine Tieridentifikations- und/oder Tiergewebeentnahmevorrichtung, geeignet zum Lagern der wenigstens einen Identifikations- und/oder Entnahmevorrichtung, umfassend
- wenigstens ein Behältnis (23), gebildet durch oder eingefügt in einen Hohlraum der Lagerungseinheit und enthaltend ein spezifisches Mittel, das dazu bestimmt ist, um wenigstens teilweise auf wenigstens ein Element der Identifikations- und/oder Entnahmevorrichtung appliziert zu werden; und
**dadurch gekennzeichnet, dass** sie umfasst:
- Sperrmittel (41), die eine irreversible Verbindung eines Steckerteils (10) und eines Buchsenteils (11) der Identifikations- und/oder der Entnahmevorrichtung verhindert.

2. Lagerungseinheit nach Anspruch 1, **dadurch gekennzeichnet, dass** das Behältnis (23) herausnehmbar ist.

3. Lagerungseinheit nach einem der Ansprüche 1 oder 2, **dadurch gekennzeichnet, dass** das Behältnis (23) mittels herausnehmbarer oder perforierbarer Verschlussmittel verschlossen ist.

4. Lagerungseinheit nach Anspruch 3, **dadurch gekennzeichnet, dass** die Verschlussmittel zur Gruppe gehören, umfassend:
- einen Deckel,
- einen Pfropfen,
- einen Abschnitt des Elements.

5. Lagerungseinheit nach einem der Ansprüche 1 bis 4, **dadurch gekennzeichnet, dass** das Behältnis (23) eine derart angepasste Form aufweist, dass das Element wenigstens teilweise in Kontakt mit dem spezifischen Mittel sein kann.

6. Lagerungseinheit nach Anspruch 5, **dadurch gekennzeichnet, dass** das Behältnis (23) einen Eingangsdurchmesser aufweist, der größer oder gleich dem Basisdurchmesser einer Spitze des Steckteils der Identifikations-und/oder Entnahmevorrichtung ist.

7. Lagerungseinheit nach einem der Ansprüche 1 bis 6, **dadurch gekennzeichnet, dass** die Sperrmittel die Form wenigstens eines Anschlags annehmen.

8. Lagerungseinheit nach einem der Ansprüche 1 bis 7, **dadurch gekennzeichnet, dass** die Sperrmittel durch den Grund des Behältnisses (23) gebildet sind, der eine Dicke (E1) aufweist, die einen unumkehrbaren Verbund des Steckteils und des Aufnahmeteils verhindert.

9. Lagerungseinheit nach einem der Ansprüche 1 bis 8, **dadurch gekennzeichnet, dass** sie ein Behältnis (23) je Identifikations- und/oder Entnahmevorrichtung umfasst.

10. Lagerungseinheit nach einem der Ansprüche 1 bis 9, **dadurch gekennzeichnet, dass** sie trennbare Abschnitte umfasst, die das Abtrennen von weinigstens einem Behältnis (23) und/oder einer Identifikationsvorrichtung und/oder einer Entnahmevorrichtung ermöglichen.

11. Lagerungseinheit nach einem der Ansprüche 1 bis 10, **dadurch gekennzeichnet, dass** das spezifische Mittel zur Gruppe gehört, umfassend:
- ein desinfizierendes Mittel;
- ein narbenbildendes Mittel;
- ein Konservierungsmittel;
- ein Trocknungsmittel;
- ein Medikament;
- einen Impfstoff;
- eine Kombination von wenigstens zwei der vorherigen Mittel.

12. Lagerungseinheit nach einem der Ansprüche 1 bis 11, **dadurch gekennzeichnet, dass** das spezifische Mittel in einer der Formen auftritt, die zur Gruppe gehören, umfassend:
- ein Gel;
- eine Creme;
- ein Fett;
- eine Flüssigkeit;
- ein Pulver;
- ein Gas;
- ein imprägnierter Schaum.

13. Verfahren zur Tieridentifikation oder zur Entnahme von Tiergewebe, das ermöglicht ein Tier ausgehend von einer Tieridentifikationsvorrichtung zu identifizieren und/oder ein Tiergewebe ausgehend von einer Tiergewebeentnahmevorrichtung zu entnehmen,
umfassend einen Schritt des Einführens wenigstens eines Elements der Identifikations- und/oder der Entnahmevorrichtung in ein Setzwerkzeug der Identifikations- und/oder der Entnahmevorrichtung;
**dadurch gekennzeichnet, dass** es außerdem die folgenden Schritte umfasst:
- Applikation, auf wenigstens einem Teil des Elements, eines spezifischen Mittels, das in einem Reservoir (23) enthalten ist, welches zu einer Lagerungseinheit nach einem der Ansprüche 1 bis 12 gehört;
- Identifizierung des Tiers und/oder Entnahme von Tiergewebe ausgehend von dem Element.

14. Verfahren zur Tieridentifikation oder zur Entnahme von Tiergewebe nach Anspruch 13, **dadurch gekennzeichnet, dass** der Schritt der Applikation einen Schritt des Perforierens des Reservoirs (23) durch das Element umfasst, ausgeführt durch Ausüben eines ersten Druckes auf das Werkzeug, und dadurch, dass der Schritt zur Identifikation und/oder Entnahme ausgeführt wird durch Ausüben eines zweiten Drucks auf das Werkzeug, der größer als der erste Druck ist.

## Claims

1. Storage unit for at least one animal identification and/or animal tissue collecting device configured to store said at least one identification and/or collecting device,
**characterized in that** it comprises:
- at least one container (23) formed by or inserted into a cavity of said storage unit and containing a specific agent designed to be applied at least partially to at least one element of said identification and/or collecting device; and
- blocking means (41) preventing an irreversible joining of a male part (10) and a female part (11) of said identification and/or collecting device

2. Storage unit according to claim 1, **characterized in that** said container (23) is detachable.

3. Storage unit according to any one of the claims 1 and 2, **characterized in that** said container (23) is closed by closing means configured to be removed or perforated.

4. Storage unit according to claim 3, **characterized in that** said closing means belong to the group comprising:
- a lid,
- a plug,
- a portion of said element.

5. Storage unit according to any one of the claims 1 to 4 **characterized in that** said container (23) has a shape adapted so that said element can be at least partially in contact with said specific agent.

6. Storage unit according to claim 5, **characterized in that** said container (23) has an inlet diameter with a size greater than or equal to the diameter of the base of a tip of the male part of said identification and/or collection device.

7. Storage unit according to anyone of the claims 1 to 6, **characterized in that** said blocking means take the shape of at least a pin.

8. Storage unit according to any one of the claims 1 to 7, **characterized in that** said blocking means are formed by the bottom of said container (23), which has a thickness (e1) sufficient to prevent the irreversible joining of said male and female parts.

9. Storage unit according to any one of the claims 1 to 8, **characterized in that** it comprises one container (23) per identification and/or collecting device.

10. Storage unit according to any one of the claims 1 to 9, **characterized in that** it comprises dividable portions enabling the separation of at least one container (23) and/or identification device and/or collecting device.

11. Storage unit according to any one of the claims 1 to 10, **characterized in that** said specific agent belongs to the group comprising:
- a disinfectant agent;
- a cicatrizing agent;
- a preserving agent;
- a desiccant agent;
- a medicine:
- a vaccine;
- a combination of at least two of the above agents.

12. Storage unit according to any one of the claims 1 to 11, **characterized in that** said specific agent takes one of the forms belonging to the group comprising:
- a gel,
- a cream,
- a fat,
- a liquid,
- a powder,
- a gas,
- an impregnated foam.

13. Method of animal identification or collecting animal tissue, enabling the identification of an animal by means of an animal identification device and/or the collecting of an animal tissue by means of an animal tissue collecting device, comprising a step for setting up at least one element of said identification and/or collecting device on an applying tool of the identification and/or collecting device;
**characterized in that** it also comprises the following steps:
- application, to at least one portion of said element, of a specific agent contained in a container (23) belonging to a storage unit according to any of the claims 1 to 12;
- identification of the animal and/or collection of animal tissue by means of said element.

14. Method of animal identification or collecting animal tissue according to claim 13, **characterized in that** said application step comprises a step for the perforation of said container (23) by said element, the step being implemented by the exertion of a first pressure on said tool, and **in that** the identification and/or collection step is implemented by the exertion of a second pressure, greater than said first pressure, on said tool.
